# EUROPEAN PATENT APPLICATION

(11) **EP 1 220 380 A2**
(43) Date of publication of application: **03.07.2002**
(21) Application number: 01310268.6
(22) Date of filing: 07.12.2001
(51) Int. Cl.: H01S 3/00

(54) **Optical resonator for optical amplification**

(30) Priority: 08.12.2000 JP 2000373679
(71) Applicant: Kobe University, Hyogo Pref. (JP)
(72) Inventor: Fukuda, Yukio, Kyoto City, Kyoto (JP)
(74) Representative: Fenlon, Christine Lesley

(57) **Abstract**

A monochromatic continuous light emitted from a laser source (10) is introduced into an optical resonator (20), and resonated and amplified in between reflecting mirrors (21, 22) provided in the optical resonator (20). Then, a given high frequency electric signal is applied to an optoacoustic element (23) from an optoacoustic element controller (30), and the thus obtained amplified monochromatic continuous light is pulsed through the optoacoustic element. The thus obtained pulse light is diffracted in an oblique direction and taken out of the optical resonator (20) to the outside.

## Description

This invention relates to a method of optical amplification, an optical amplifier and an optical resonator, particularly to a method of optical amplification, an optical amplifier and an optical resonator suitable for various laser apparatus and various optical instruments.

A single-mode continuous-wave can provide a monochromatic continuous light with a remarkable narrow spectrum line width. However, since the monochromatic continuous light is relatively small in amplitude, it is required to be amplified by an optical amplifier depending on its use.

A conventional optical amplifier has an amplifying medium therein. Then, a pumping energy is given to the amplifying medium from the outside to excite the amplifying medium and the monochromatic continuous light to be amplified is introduced into the excited amplifying medium.

However, since the amplifying medium has its inherent limited amplifying wavelength region, and it is required to be exchanged depending on the wavelength of the monochromatic continuous light. Therefore, it may happen that a suitable amplifying medium can not be provided for some monochromatic continuous lights.

Moreover, since the above conventional optical amplifier including the amplifying medium therein may emit an unnecessary light due to spontaneous emission with an amplified monochromatic continuous light, it may require another instrument for eliminating the unnecessary light. Therefore, the entire optical amplifier may have complicated structure entirely.

Preferred embodiments of the present invention seek to provide a new method of optical amplification to mitigate tte above problem due to the use of the amplifying medium.

According to embodiments of the present invention there is provided a method of optical amplification comprising the steps of:
introducing a monochromatic continuous light from a laser source into an optical resonator,
reflecting the continuous light in between two reflecting mirrors provided at both ends of the optical resonator, thereby to amplify the continuous light,
passing the thus obtained amplified continuous light through an optoacoustic element installed in the optical resonator to which a high frequency electric signal is applied in pulse, thereby to pulse the amplified continuous light, and
taking the thus obtained pulsed light out of the optical resonator to the outside.

Moreover, embodiments of the present invention advantageously provide an optical amplifier comprising a laser source to emit a single wavelength light and an optical resonator having an optoacoustic element therein and reflecting mirrors at both ends therein.

Preferably, this invention also relates to an optical amplification comprising an optoacoustic element therein and reflecting mirrors at both ends therein.

The inventors have intensely studied in order to develop a new method of optical amplification and a new optical amplifier in which the above mentioned difficulties are alleviated. As a result, they have found that an optical resonator embodying the present invention can amplify the monochromatic continuous light irrespective of its wavelength, in contrast to the known amplifying medium. Therefore, the method of optical amplification embodying the present invention, and an optical amplifier using the optical resonator can advantageously amplify the monochromatic continuous light irrespective of its wavelength.

According to an embodiment of the present invention, a monochromatic continuous light from a given laser source is introduced into the optical resonator embodying the present invention, and resonates with the optical resonator with the reflecting mirrors to obtain an amplified monochromatic continuous light. Then, the amplified monochromatic continuous light is pulsed by the optoacoustic element to which a given high frequency electric signal is applied in pulse. The thus obtained monochromatic pulsed light is diffracted in an oblique direction due to the optoacoustic effect of the optoacoustic element, and taken out through a window or an optical fiber installed at the optical resonator.

In this case, the monochromatic continuous light is moved back and forth between the reflecting mirrors to resonate with the optical resonator and is amplified. When the diffraction efficiency of the optoacoustic element is set to 100%, the monochromatic continuous light is pulsed so as to have a pulse width less than or equal to the round trip time of the light in the optical resonator. The maximum pulse width is represented by "2L/c" (second), provided that the length of the optical resonator is "L" and the velocity of light is "c".

In place of the above-mentioned optoacoustic element, an electro-optical element and an polarizing beam splitter may be employed. In this case, a given direct current signal is given to the electro-optical element, and thus, the amplified monochromatic continuous light, at the electro-optical element, is changed in its polarization condition and pulsed. Then, the thus obtained pulsed light having the changed polarization condition is reflected in an oblique direction by the polarizing beam splitter and is taken out to the outside.

In a preferred embodiment of the present invention, an electrostrictive element is preferably provided at either of the reflecting mirrors at both ends of the optical resonator. When a given voltage is applied to the electrostrictive element from an external electric power supply, the electrostrictive element is expanded or shrunk due to the electrostrictive effect. Therefore, the position of the reflecting mirror having the electrostrictive element can be controlled.

Generally, the wavelength of the monochromatic continuous light from the laser source fluctuates with time and the length of the optical resonator fluctuates due to the temperature change and the vibration in the optical resonator. Therefore, according to the preferred embodiment of the present invention, if either of the reflecting mirrors provided at both ends of the optical resonator has the electrostrictive element, the position of the one reflecting mirror is controlled automatically by the electrostrictive element and thus, the resonance condition of the monochromatic continuous light is always maintained. As a result, the above-mentioned effect of the present invention is always provided.

For a better understanding of the present invention, and to show how the same may be carried into effect reference is made to the attached drawing, wherein:

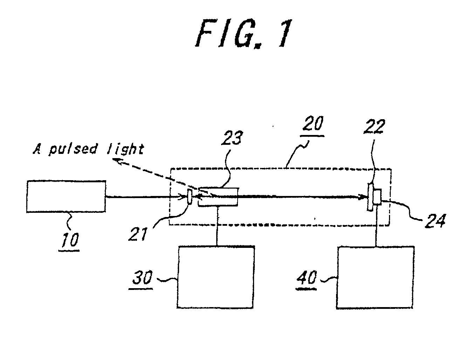

Fig. 1 is a structural view of an optical amplifier embodying the present invention.

Fig. 1 is a structural view of an optical amplifier embodying the present invention.

An optical amplifier shown in Fig. 1 includes a laser source 10 and an optical resonator 20. Then, reflecting mirrors 21 and 22 are provided at both ends of the optical resonator 20, and an optoacoustic element 23 is provided at the forward area of the reflecting mirror 21. Moreover, an electrostrictive element 24 is provided at the rear surface of the reflecting mirror 22.

An optoacoustic element controller 30 is connected to the optoacoustic element 23, and thus, a given high frequency electric signal is applied to the optoacoustic element 23 from the optoacoustic element controller 30. Moreover, an electrostrictive element controller 40 is connected to the electrostrictive element 24.

A monochromatic continuous light emitted from the laser source 10 is introduced into the optical resonator 20, and resonates and is amplified and amplified in between the reflecting mirrors 21 and 22. The amplifying ratio of the optical resonator 20 is represented as about 1/(1-R), provided that the reflection coefficients of the reflecting mirrors 21 and 22 are "R" and "1", respectively. Therefore, if the reflection coefficient R is set to 99%, the amplifying ratio 1/(1-R) amounts to 100. As a result, in this case, the amplitude of the monochromatic continuous light is amplified by 100 times.

If the reflection coefficient R of the reflecting mirror 21 is changed arbitrarily, the amplifying ratio 1/(1-R) can be controlled freely. Practically, if the reflecting mirror 21 is composed of a commercially available reflecting mirror, the amplifying ratio can be set up to 10000.

When a given high frequency electric signal is applied to the optoacoustic element 23 from the optoacoustic element controller 30, the thus obtained amplified monochromatic continuous light is pulsed and diffracted in an oblique direction through the optoacoustic element 23. Therefore, the amplified continuous light can be taken out, as a pulsed monochromatic light, of an optical window or an optical fiber which is provided in the reflected direction to the outside.

Moreover, when a given voltage is applied to the electrostrictive element 24 provided on the rear surface of the reflecting mirror 22 from the electrostrictive element controller 40, the electrostrictive element 24 can control the position of the reflecting mirror 22 by the electrostrictive effect.

As mentioned above, the wavelength of the monochromatic continuous light fluctuates slightly with time, and the length of the optical resonator 20 fluctuates due to the temperature change and the vibration in the optical resonator 20. Therefore, as mentioned above, if the electrostrictive element 24 is provided at the reflecting mirror 22, the position of the reflecting mirror 22 is controlled, so that the resonance condition in the optical resonator 20 can be maintained for a long time and the monochromatic continuous light can be amplified stably for a long time.

Moreover, if the diffraction efficiency of the optoacoustic element 23 is set to 100%, the amplified monochromatic continuous light is converted to a pulsed light having a pulse width equal to the back and forth period of the continuous light in the optical resonator 20. If the diffraction efficiency of the optoacoustic element 23 is decreased, the pulse width can be changed.

For example, if the diffraction efficiency of the optoacoustic element 23 is decreased to 10% from 100%, the attenuation time of the monochromatic continuous light in the optical resonator 20 becomes equal to the 10 times period of the back and forth period thereof in the optical resonator 20. As a result, the time period of the thus obtained pulsed light can be elongated by 10 times and the pulsed light can have a 10 times pulse width.

When the diffraction efficiency of the optoacoustic element 23 is decreased, the amplified monochromatic pulsed light is attenuated exponentially, but if the amplitude of the high frequency electric signal to be applied to the optoacoustic element 23 is changed with time, the amplified monochromatic pulsed light can have various shape such as a rectangular shape.

Moreover, as mentioned above, an electro-optical element and a polarizing beam splitter may be employed in place of the optoacoustic element 23.

In this case, the pulse width of the pulsed light can be adjusted by changing a pulsed current electric signal in temporal width to be applied to the electro-optical element. Moreover, the pulse shape of the pulsed light can be adjusted by changing the amplitude of the pulsed direct current electric signal.

The optoacoustic element 23 and the electrostrictive element 24 of the present invention may be composed of commercially available ones, respectively. Moreover, the laser source 10 may be also composed of a conventional one for the purpose.

The optoacoustic element controller 30 and the electrostrictive element controller 40 may have high frequency electric power supplies, direct current electric power supplies, controllers and additional instruments, respectively, and may have any structures, respectively.

Although the present invention was described in detail with reference to the above example, this invention is not limited to the above disclosure and every kind of variation and modification may be made without departing from the scope of the present invention.

As explained above, according to the optical amplifying method, the optical amplifier and the optical resonator for the optical amplifying, the monochromatic continuous light can be amplified within a wide wavelength range without the unnecessary light emission due to the spontaneous emission, different from the conventional optical amplifying method and optical amplifier using the optical resonator having the amplifying medium therein.

## Claims

1. An optical amplifying method comprising the steps of:
introducing a continuous light having a single wavelength into an optical resonator from a laser source,
reflecting the continuous light in between two reflecting mirrors provided at both ends of the optical resonator, thereby to amplify the continuous light,
passing the thus obtained amplified continuous light through an optoacoustic element installed in the optical resonator to which a high frequency electric signal is applied in pulse, thereby to pulse the amplified continuous light, and
taking the thus obtained pulsed light out of the optical resonator to the outside.

2. An optical amplifying method as defined in claim 1, further comprising the step of controlling the resonance length of the optical resonator by applying a given voltage to an electrostrictive element provided at either of the two reflecting mirrors.

3. An optical amplifying method as defined in claim 1 or 2, further comprising the step of controlling the pulse width of the pulsed light by changing the diffraction efficiency of the optoacoustic element.

4. An optical amplifying method as defined in claim 3, wherein the pulse shape of the pulsed light is adjusted by changing the amplitude of the high frequency electric signal to be applied to the optoacoustic element with time.

5. An optical amplifying method comprising the steps of:
introducing a continuous light having a single wavelength into an optical resonator from a laser source,
reflecting the continuous light in between two reflecting mirrors provided at both ends of the optical resonators, thereby to amplify the continuous light,
passing the thus obtained amplified continuous light through an electro-optical element installed in the optical resonator to which a direct current electric signal is applied in pulse, thereby to change the polarization condition of the amplified continuous light, and
taking the amplified continuous light having the changed polarization condition, as a pulsed light, out of the optical resonator through a polarizing beam splitter installed in the optical resonator.

6. An optical amplifying method as defined in claim 5, further comprising the step of controlling the resonance length of the optical resonator by applying a given voltage to an electrostrictive element provided at either of the two reflecting mirrors.

7. An optical amplifying method as defined in claim 5 or 6, further comprising the step of controlling the pulse width of the pulsed light by changing the direct current electric signal of the electro-optical element.

8. An optical amplifying method as defined in claim 7, wherein the pulse shape of the pulsed light is adjusted by changing the amplitude of the pulsed current electric signal in temporal width to be applied to the optoacoustic element with time.

9. An optical amplifier comprising a laser source to emit a single wavelength and an optical resonator having an optoacoustic element therein and reflecting mirrors at both ends therein.

10. An optical amplifier as defined in claim 9, further comprising an electrostrictive element at either of the reflecting mirrors provided in the optical resonator.

11. An optical amplifier comprising a laser source to emit a single wavelength, and an optical resonator having an electro-optical element and a polarizing beam splitter therein and reflecting mirrors at both ends therein.

12. An optical amplifier as defined in claim 11, further comprising an electrostrictive element at either of the reflecting mirrors provided in the optical resonator.

13. An optical resonator for optical amplifying comprising an optoacoustic element therein and reflecting mirrors at both ends therein.

14. An optical resonator for optical amplifying as defined in claim 13, further comprising an electrostrictive element at either of the reflecting mirrors provided therein.

15. An optical resonator for optical amplifying comprising an electro-optical element and a polarizing beam splitter therein, and reflecting mirrors at both ends therein.

16. An optical resonator for optical amplifying as defined in claim 15, further comprising an electrostrictive element at either of the reflecting mirrors provided therein.
